Europäisches Patentamt

European Patent Office

Office européen des brevets

(19)

(11) Veröffentlichungsnummer: **0 276 355 B1**

(12) **EUROPÄISCHE PATENTSCHRIFT**

(45) Veröffentlichungstag der Patentschrift: **11.09.91**

(51) Int. Cl.5: **B01D 25/12**

(21) Anmeldenummer: **87106987.8**

(22) Anmeldetag: **14.05.87**

(54) **Filterpresse mit einer Anzahl Membranfilterplatten.**

(30) Priorität: **29.01.87 CH 299/87**

(43) Veröffentlichungstag der Anmeldung:
**03.08.88 Patentblatt 88/31**

(45) Bekanntmachung des Hinweises auf die
Patenterteilung:
**11.09.91 Patentblatt 91/37**

(84) Benannte Vertragsstaaten:
**AT BE CH DE ES FR GB IT LI NL SE**

(56) Entgegenhaltungen:
**AU-B- 33 422**
**DE-A- 12 344**
**DE-A- 2 933 034**
**FR-A- 1 363 465**
**US-A- 4 237 009**

(73) Patentinhaber: **Lenser Kunststoff-Presswerk
GmbH & Co. KG**

**W-7913 Senden(DE)**

(72) Erfinder: **Urech, Rolf
Entenweidstrasse 9
CH-4142 Muenchenstein(CH)**
Erfinder: **Mayer, Ludwig
Bahnhofstrasse 2
W-7971 Aitrach(DE)**

(74) Vertreter: **Fay, Hermann, Dipl.-Phys. Dr. et al
Ensingerstrasse 21 Postfach 1767
W-7900 Ulm (Donau)(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Filterpresse mit einer Anzahl Membranfilterplatten, die zwischen einem ortsfesten Kopfteil und einer Preßplatte verschiebbar angeordnet sind, einer Vorrichtung zum Zusammenpressen der Membranfilterplatten zwischen dem Kopfteil und der Preßplatte, und einer Vorrichtung zum Zuführen eines gasförmigen Mediums unter Druck zu den Membranen der Membranfilterplatten, mit einer eine Anzahl Ventile aufweisenden Einrichtung zum beschleunigten Entspannen des gasförmigen Druckmediums in den Membranfilterplatten, wobei jeder Membranfilterplatte eines der genannten Ventile zugeordnet ist und die Einrichtung Mittel zum automatischen Schließen der Ventile aufweist, wenn die Membranfilterplatten zusammengepreßt werden und zum automatischen öffnen der Ventile, wenn der Plattenabstand durch Nachlassen des von der Vorrichtung auf die Membranfilterplatten ausgeübten Schließdrucks zunimmt.

Bei bekannten Membranfilterplatten dieser Art wird die Kuchenfiltration vorzeitig abgebrochen, um mit Hilfe von geeigneten Membranfilterplatten die bereits aufgebauten Feststoffkuchen noch mechanisch auszupressen. Auf diese bekannte Weise kann bei entsprechenden Aufschlämmungen auf eine wirtschaftliche Art der gewünschte Feststoffgehalt im Filterkuchen erreicht werden.

Die bekannten Membranfilterplatten sind mit einer oder zwei beweglichen Membranen, die mit Preßluft oder einem anderen Medium beaufschlagbar sind, ausgerüstet. Es wird dabei mit einem Druck zwischen 4 bis 16 bar gearbeitet. Je nach Filterplattengröße und dem Druck, welchem die Membranen ausgesetzt werden, ergibt sich ein recht großes Gasvolumen, das für das mechanisierte Auspressen des Filterkuchens notwendig ist. Die Preßteile der Filterpresse müssen der erhöhten Beanspruchung während des mechanischen Auspressens standhalten, d. h. es muß eine äquivalente Schließkraft sichergestellt sein. Ein Nachlassen der Schließkraft der Filterpresse während der Zeit, zu der die Membranen mit Druck beaufschlagt sind, kann katastrophale Folgen nach sich ziehen. Obwohl elektrische Steuerungen mit entsprechenden Sicherheitsschaltungen vorgesehen sind, kann ein Dichtungselement in der hydraulischen Anlage versagen und undicht werden, ein Druckrohr brechen oder ein Hydraulikschlauch platzen. Selbst wenn in der Zuführleitung des Druckmediums ein Druckentlastungsventil vorgesehen ist, ist dieses nicht in der Lage, das komprimierte Gasvolumen in einer nützlichen Frist zu entspannen.

Eine derartige Filterpresse ist aus der EP-A-O 253 315 (Stand der Technik im Simme von Artikel 54(3) EPÜ) bekannt. Bei dieser Filterpresse ist einerseits ein über Druckluft gesteuertes Schnellentlüftungssystem vorgesehen, bei welchem der hydraulische Schließdruck überwacht und bei Unterschreiten eines vorgeschriebenen Wertes die Schnellentlüftungsventile an den Platten geöffnet werden.

Andererseits ist bei dieser Filterpresse noch ein weiteres Schnellentlüftungssystem vorgesehen, das ausschließlich auf der Feststellung des gegenseitigen Plattenabstandes beruht. Jedes Ventilgehäuse enthält hierbei eine Schieberbohrung, einen in der Schieberbohrung geführten Schieber sowie einen aus dem Ventilgehäuse hervorstehenden, den Schieber entgegen einer Federkraft verstellenden Stößel. Bei geschlossener Filterpresse stößt das aus dem Ventilgehäuse hervorstehende Ende des Stößels gegen ein Teil der benachbarten Filterplatte, z. B. gegen das dortige Ventilgehäuse, wodurch der Schieber gegen die Federkraft verstellt wird. Die Schieberbohrung ist mit einem in den Druckluftraum der Filterplatte mündenden Kanal sowie einer zur Atmosphäre führenden Bohrung versehen, wobei die Verbindung vom Druckluftraum zur Atmosphäre je nach Stellung des Schiebers geöffnet oder geschlossen ist.

Dieses ausschließlich auf der Feststellung des gegenseitigen Plattenabstands beruhende Schnellentlüftungssystem hat jedoch den Nachteil, daß eine Belüftung erst dann eintritt, wenn bereits ein relativ großer Bewegungshub zwischen zwei Membranplatten stattgefunden hat. Dieses Entlüftungssystem ist daher nur geeignet, als zusätzliche Sicherheitsmaßnahme bei einem hydraulisch oder mit Preßluft gesteuerten Entlüftungssystem zu arbeiten, wie es im übrigen in der EP-A-O 253 315 beschrieben ist. Darüber hinaus besteht keine Möglichkeit, die einzelnen Ventile geeignet so einzujustieren, daß schon im Vorfeld möglicher Gefährdungen eine wirksame und schnelle Entlüftung der einzelnen Membranplatten eingeleitet wird.

Der Erfindung liegt die Aufgabe zugrunde, eine Filterpresse der eingangs genannten Art zu schaffen, bei welcher sich das komprimierte Gasvolumen innerhalb kürzester Frist entspannen kann, bevor Beschädigungen auftreten.

Diese Aufgabe wird in einer ersten vorteilhaften Ausgestaltung dadurch gelöst, daß jedes Ventil einen in einer Bohrung verschiebbaren Kolben und eine Ventilfeder zum öffnen des Ventils, wenn keine von dem Schließdruck herrührenden äußeren Kräfte auf den Kolben einwirken, aufweist, daß in der Bohrung eine radial nach außen verlaufende Umfangsnut vorhanden ist, die über einen Kanal mit dem Raum zwischen den Membranen der Membranfilterplatten in Verbindung steht; und daß im genannten Kolben wenigstens eine axial verlaufende Nut vorhanden ist, durch welche das gasförmige Medium in die umgebende Atmosphäre strömt, wenn das Ventil geöffnet ist.

Gemäß einer vorteilhaften Weiterbildung der Erfindung ist vorgesehen, daß beidseits der Umfangsnut je eine weitere Umfangsnut zur Aufnahme je eines Dichtungsringes vorhanden ist, daß jeder Kolben eine axiale Sackbohrung oder Durchgangsbohrung aufweist, daß wenigstens im der axial verlaufenden Nut abgewandten Endbereich der genannten Bohrung ein Innengewinde vorhanden ist, in das eine Stellschraube mit einem flachen Kopf und zum Verstellen der Länge des Kolbens eingeschraubt ist und daß der flache Kopf als Anschlag für die Ventilfeder dient. Dabei umfassen die Mittel zum Schließen und öffnen der Ventile eine Anzahl Distanzbolzen, eine um eine Achse schwenkbare Wippe und einen Anschlag. Jeder Distanzbolzen ist in einer Bohrung verschiebbar angeordnet und weist ein Innengewinde auf, in das eine Justierschraube zum Einstellen der Länge des Distanzbolzens eingeschraubt ist. Die Kolben sind zweckmäßigerweise längs einer ersten Geraden einer Reihe angeordnet, während die Distanzbolzen und der genannte Anschlag längs einer zweiten im wesentlichen zur ersten Geraden parallelen Geraden angeordnet sind, wobei die Achse, um welche die Wippe schwenkbar ist, entweder am Kopfteil oder an der Preßplatte und der genannte Anschlag an der Preßplatte oder am Kopfteil befestigt ist.

Weiter ist zweckmäßigerweise vorgesehen, daß je einer der Kolben und je einer der Distanzbolzen in entsprechenden Bohrungen in einem von der Anzahl Blockgehäusen verschiebbar angeordnet sind, und daß in einem Eckbereich und an einer der Schmalseiten jeder Filterplatte eines der Blockgehäuse angeordnet ist. Weiter ist hierbei vorgesehen, daß in der an der Schmalseite anliegenden Fläche des Blockgehäuses eine kreisrunde Ausnehmung vorhanden ist, daß im Randbereich der Ausnehmung ein Dichtungsring angeordnet ist, daß der Innenraum der Ausnehmung einerseits über wenigstens eine Bohrung im Blockgehäuse mit der Umfangsnut und andererseits über eine Sackbohrung im Randbereich der zugeordneten Membranfilterplatte mit dem Raum zwischen den Membranen der Membranfilterplatte in Verbindung steht.

Eine zweite vorteilhafte Lösung der der Erfindung zugrunde liegenden Aufgabe sieht vor, daß jedes Ventil in einem randseitig angeschlossenen Blockgehäuse und der Ventilteller des Ventils auf einem axial in Schließrichtung der Filterpresse verstellbaren Kolben angeordnet ist und in geschlossenem Zustand mit seiner der Dichtfläche abgewandten Stirnfläche etwa bündig mit der einen Seitenfläche des Blockgehäuses abschließt, wobei in die Fläche des Ventilsitzes mindestens eine sich im wesentlichen in axialer Richtung des Kolbens erstreckende Bohrung mündet, die mit zu einem quer zum Kolben verlaufenden Kanal und über diesen mit dem Raum zwischen den Membranen der Membranfilterplatten in Verbindung steht, und daß dem Ventilteller gegenüberstehend auf der anderen Seitenfläche des Blockgehäuses ein in axialer Richtung des Kolbens ver- und feststellbarer Distanzbolzen vorgesehen ist, dessen außenseitige Stellfläche dem Ventilteller der benachbarten Membranfilterplatte anliegt und unter dem Preßdruck der Filterpresse das Ventil geschlossen hält.

Der Distanzbolzen ist dabei zweckmäßigerweise zu seiner axialen Verstellung mantelseitig mit einem Außengewinde versehen, das in ein entsprechendes Innengewinde im Blockgehäuse greift und an seiner Mantelfläche eine Ringnut für einen den Distanzbolzen gegen das Blockgehäuse abdichtenden Dichtring aufweist. Der Kolben ist vorteilhafterweise mit einem seinen Verstellhub begrenzenden, in einer quer zu seiner Achse verlaufenden Bohrung angeordneten Kerbstift versehen. Im übrigen kann der Distanzbolzen auf seiner der Stellfläche abgewandten Seite mit einer axialen Aufnahmebohrung für den Kolben versehen sein, die diesen endseitig führt.

Weiter empfiehlt es sich, daß die Dichtfläche des Ventiltellers eine kegelstumpfförmige Gestalt aufweist, da sich der Ventilteller dann unter dem Preßdruck der Filterpresse selbsttätig auf dem Ventilsitz zentriert.

Eine weitere Lösung der der Erfindung zugrunde liegenden Aufgabe ist dadurch gekennzeichnet, daß jedes Ventil in einem randseitig angeschlossenen Blockgehäuse angeordnet ist, wobei das Ventil von einem im wesentlichen zylindrischen Verschlußstopfen gebildet ist, der axial verschiebbar in einem sich durch das Blockgehäuse erstreckenden Kanal geführt ist, der im wesentlichen parallel zur Ebene der Membranen verläuft, und dessen eines Ende mit dem Raum zwischen den Membranen der Membranfilterplatten in Verbindung steht, während dessen anderes Ende ins Freie mündet, und daß zu beiden Seiten des Verschlußstopfens je ein Distanzbolzen angeordnet ist, die beide in einer den Kanal zentrisch und rechtwinklig schneidenden Führungsbohrung angeordnet sind und jeweils in eine Keilausnehmung des Verschlußstopfens greifen, wobei die Keilfläche auf der der Membranfilterplatte zugewandten Seite in die Mantelfläche des Verschlußstopfens einmündet und die dem Verschlußstopfen anliegenden Stirnflächen der Distanzbolzen der Keilausnehmung angepaßte Keilschrägen aufweisen.

Der Verschlußstopfen ist dabei zweckmäßigerweise zwischen seinem der Membranfilterplatte zugewandten Ende und den Keilausnehmungen an seiner Mantelfläche mit einer Ringnut für einen den Verschlußstopfen gegen das Blockgehäuse abdichtenden Dichtring versehen. Die Distanzbolzen weisen zweckmäßigerweise eine sich in axialer Richtung erstreckende Schlitzausnehmung auf, durch die hindurch zu deren Hubbegrenzung und drehfesten Lagerung ein im Blockgehäuse feststehender Kerbstift greift.

Der Distanzbolzen weist eine etwas größere Länge als die ihn aufnehmende Führungsbohrung auf, so daß bei dicht aneinander liegenden Membranfilterplatten die stirnseitig einander anliegenden Distanzbolzen in die Keilausnehmungen der Verschlußstopfen greifen.

Schließlich ist der Verschlußstopfen an seinem aus dem Blockgehäuse vorstehenden Ende mit einem Anschlußglied für eine Sicherungskette oder dergl. versehen, die im Falle einer Auslösung den aus dem Blockgehäuse zur Druckentlastung herausfliegenden Verschlußstopfen abfängt.

Im folgenden wird die Erfindung an in der Zeichnung dargestellten Ausführungsbeispielen näher erläutert; es zeigen:

Fig. 1 die Seitenansicht einer Ausführungsform der erfindungsgemäß Membranfilterplatten aufweisenden Filterpresse,

Fig. 2 den oberen Eckbereich von den Ventile enthaltenden Membranfilterplatten in einem größeren Maßstab gezeichnet, wobei die Ventile in der Schließstellung dargestellt sind und eines der Ventile im Schnitt gezeichnet ist,

Fig. 3 die gleiche Darstellungsart wie in Fig. 2, wobei jedoch die Ventile in der offenen Stellung dargestellt sind,

Fig. 4 einen Schnitt entlang der Linie IV - IV nach der Fig. 3,

Fig. 5 einen Schnitt entlang der Linie V - V nach Fig. 4,

Fig. 6 das Blockgehäuse in einer der Fig. 3 entsprechenden Schnittdarstellung einer weiteren Ausführungsform,

Fig. 7 einen Schnitt durch den Gegenstand nach Fig. 6 längs der Linie VII-VII,

Fig. 8 eine Stirnansicht des Gegenstands nach Fig. 6 in Richtung VIII,

Fig. 9 eine der Fig. 7 entsprechende Schnittdarstellung einer weiteren Ausführungsform,

Fig.10 den Gegenstand nach Fig. 9 in Seitenansicht in Richtung X,

Fig.11 den Gegenstand nach Fig. 9 in Stirnansicht in Richtung XI.

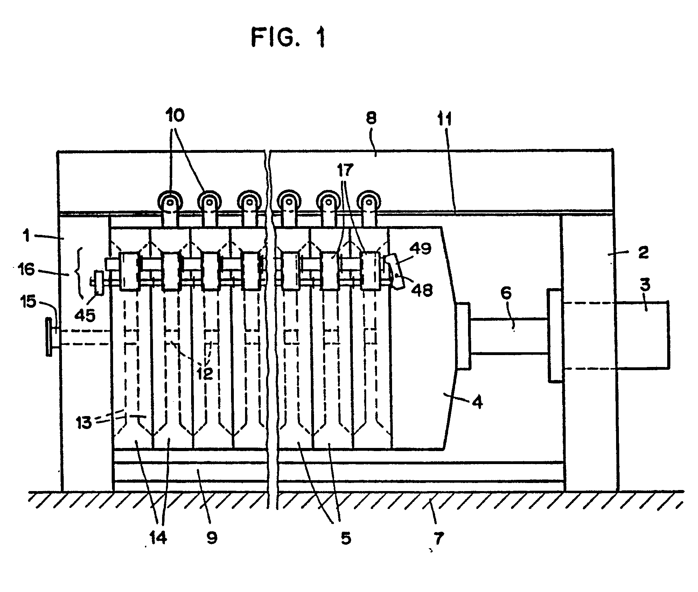

Die in der Fig. 1 dargestellte Ausführungsform der erfindungsgemäßen Filterpresse weist einen als Kopfteil 1 dienenden ersten Ständer und einen zweiten Ständer 2 auf, an welchem eine hydraulische Vorrichtung 3 zum Zusammenpressen von zwischen dem Kopfteil 1 und einer Preßplatte 4 angeordneten Membranfilterplatten 5 montiert ist. Die Preßplatte 4 ist über eine Kolbenstange 6 mit dem nicht dargestellten hydraulischen Zylinderkolbenantrieb der Vorrichtung 3 verbunden. Der Kopfteil 1 und der zweite Ständer 2 sind im Boden 7 verankert. Die oberen Enden des Kopfteiles 1 und des zweiten Ständers 2 sind über einen Balkenträger 8 starr miteinander verbunden. Zur Entlastung der Verankerung des Kopfteiles und des zweiten Ständers sind die unteren Enden derselben mit tels einer Zugstange 9 miteinander verbunden.

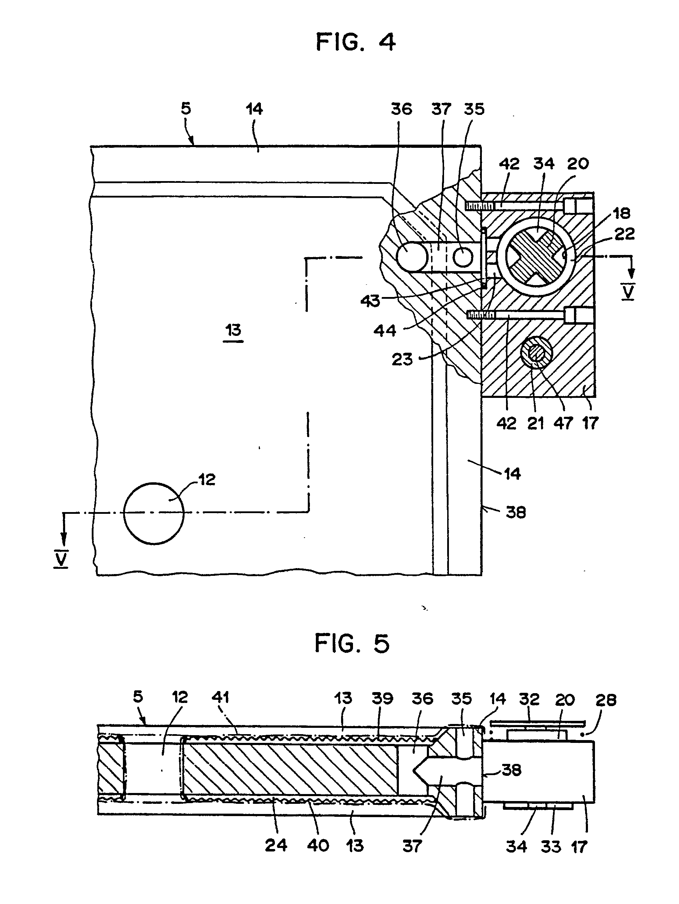

Zwischen dem Kopfteil 1 und der Preßplatte 4 sind eine Anzahl, beispielsweise 50, von den Membranfilterplatten 5 angeordnet. Jede der Membranfilterplatten 5 ist über je ein Laufrollenpaar 10 längs Führungsschienen 11 verschiebbar. Jede der mit Bezugnahme auf die Fig. 4 und 5 weiter unten näher beschriebenen Membranfilterplatten 5 weist eine zentrale Öffnung 12 und auf gegenüberliegenden Seiten je eine Vertiefung 13 auf, die von einem breiteren Randbereich 14 der Membranfilterplatte 5 umgeben ist. Über einen den Kopfteil 1 durchsetzenden Rohranschluß 15 wird die Aufschlämmung, deren Feststoffanteile ausgefiltert werden sollen, der Filterpresse zugeführt.

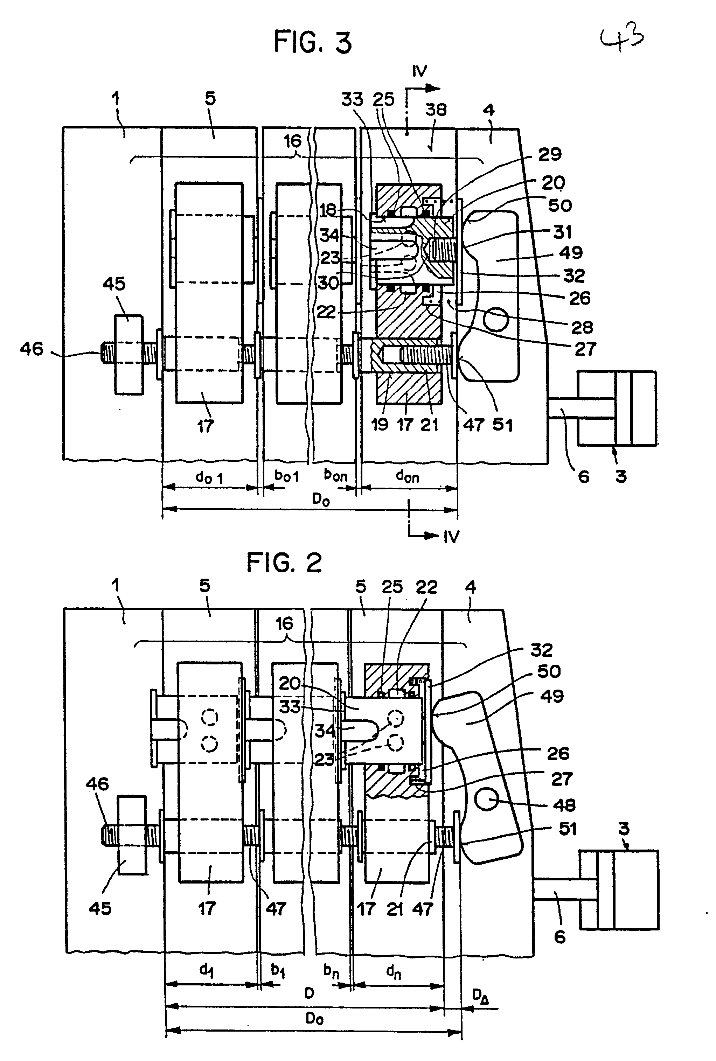

Jeder Membranfilterplatte 5 ist ein Teil einer Einrichtung 16 zum beschleunigten Entspannen eines auf eine unten beschreibene Weise in einen Druckraum 24 innerhalb der Vertiefungen 13 eingeführten Druckmediums zugeordnet. Die Einrichtung 16 umfaßt Blockgehäuse 17, von denen je eines in einem Eckbereich an jeder Membranfilterplatte 5 befestigt ist, siehe Fig. 2 bis 4.

In einer ersten Ausführungsform sind, wie die Fig. 3 und 4 zeigen, in jedem der Blockgehäuse 17 eine erste Bohrung 18 und eine zweite Bohrung 19 mit einem kleineren Durchmesser als die erste Bohrung vorhanden. In der ersten Bohrung 18 ist ein Kolben 20 und in der zweiten Bohrung 19 ein Distanzbolzen 21 axial verschiebbar angeordnet. In der Innenwand der ersten Bohrung 18 ist eine radiale nach außen verlaufende Umfangsnut 22 eingelassen, die über zwei quer zur ersten Bohrung 18 verlaufende Bohrungen 23 auf eine weiter unten beschriebene Weise mit dem Druckraum 24, siehe Fig. 5, der betreffenden Membranfilterplatte in Verbindung steht. Auf beiden Seiten der Umfangsnut 22 ist je eine Nut, in der ein Dichtungsring 25 angeordnet ist, vorhanden.

Auf der einen Seite weist die erste Bohrung 18 eine Erweiterung 26 auf, in der eine ringförmige, sich axial erstreckende Nut 27 eingelassen ist, in welcher Nut eine Druckfeder 28 koaxial zum Kolben 20 angeordnet ist.

Der Kolben 20 besitzt eine axiale, mit einem Innengewinde 29 versehene Sackbohrung 30. In das Innengewinde 29 ist eine Stellschraube 31 mit dem flachen Kopf 32 eingeschraubt. Der Durchmesser des Kopfes 32 ist größer als der Außendurchmesser der Druckfeder 28, aber kleiner als der Durchmesser der Erweiterung 26. Mit Hilfe der Stellschraube 31 kann die Länge des Kolbens äußerst fein eingestellt werden.

Auf der der Stellschraube 31 gegenüberliegenden Seite des Kolbens 20 ist ein radial vorstehender Rand 33 vorhanden. In die Mantelfläche des Kolbens 20 sind vier axial verlaufende Nuten 34 eingelassen, die sich etwa über die halbe Länge des Kolbens 20 erstrecken. Der in der ersten Bohrung 18 verschiebbare Kolben 20 mit den axialen Nuten 34 und die Druckfeder 28 bilden zusammen ein Ventil, welches im geöffneten Zustand den Druckraum 24 der zugeordneten Membranfilterplatte 5 direkt mit der umgebenden Atmosphäre verbindet, so daß das im Druckraum 24 befindliche Druckmedium jeder Membranfilterplatte 5 sich möglichst schnell entspannen kann, wenn dies erforderlich ist.

Die Fig. 4 und 5 zeigen einen Eckbereich einer der Membranfilterplatten 5 in der Ansicht und im Schnitt. In der Fig. 5 ist deutlich erkennbar, daß jede Membranfilterplatte 5 auf gegenüberliegenden Seiten je eine der Vertiefungen 13, in der Mitte die zentrale Öffnung 12 und den diese Vertiefungen 13 umgebenden verbreiterten Randbereich 14 aufweist. Im Randbereich 14 ist eine erste durchgehende Querbohrung 35 und im daran anschließenden Bereich der Vertiefungen 13 eine zweite Querbohrung 36 vorhanden. Bei seitlich nebeneinander angeordneten Membranfilterplatten 5 bilden die ersten Querbohrungen 35 einen Zuführkanal für das Druckmedium, z. B. Preßluft. Die beiden Querbohrungen 35 und 36 sind durch eine im wesentlichen senkrecht dazu verlaufende Sackbohrung 37 miteinander verbunden, die in eine Schmalseite 38 der Membranfilterplatte 5 ausmündet.

Gemäß der Fig. 5 erstrecken sich zwischen dem Randbereich der zentralen Öffnung 12 und den Übergangsstellen zwischen den Vertiefungen 13 und dem verbreiterten Randbereich 14 je eine elastische Membrane 39 bzw. 40. Die Randbereiche der Membranen 39 und 40 sind zum Bilden des Druckraums 24 mit dem Rand der zentralen Öffnung 12 und den genannten Übergangsstellen luftdicht verschweißt, so daß, wenn das Druckmedium durch die erste Querbohrung 35, die Sackbohrung 37 und die zweite Querbohrung 36 in den Druckraum 24 gelangt, die elastischen Membranen 39 und 40 nach außen gedehnt werden. Um die Membranen 39 und 40 herum und durch die zentrale Öffnung 12 hindurch erstreckt sich ein Filtertuch 41, das nur in der Fig. 5 mit einer strichpunktierten Linie angedeutet ist.

Der Rand des Filtertuches 41 erstreckt sich ein wenig über den verbreiterten Randbereich 14 der Membranfilterplatte 5 hinaus.

Aus der Fig. 4 ist erkennbar, daß das Blockgehäuse 17 mittels zwei Schrauben 42 an der Schmalseite 38 der Membranfilterplatte 5 befestigt ist. Im Bereich der Ausmündung der Sackbohrung 37 im verbreiterten Randbereich 14 der Membranfilterplatte 5 ist eine kreisrunde Ausnehmung 43 im Blockgehäuse 17 vorhanden.

Am Rand der Ausnehmung 43 befindet sich ein Dichtungsring 44 zum luftdichten Verschließen des Übergangs zwischen der Membranfilterplatte 5 und dem Blockgehäuse 17. Wenn keine andere Kraft als die Rückführkraft der Druckfeder 28 via den Kopf 32 der Stellschraube 31 auf den Kolben 20 einwirkt, ist das den Kolben 20 umfaßende Ventil geöffnet. In dieser Stellung steht der Druckraum 24 über die zweite Querbohrung 36, die Sackbohrung 37, die Ausnehmung 43, die Bohrungen 23, die Umfangsnut 22 und die axiale Nuten 34 mit der äußeren Atmosphäre in Verbindung. Diese Offenstellung des Kolbens 20 ist in der Fig. 3 dargestellt.

Die Einrichtung 16 zum beschleunigten Entspannen des gasförmigen Mediums in Druckraum 24 umfaßt nebst den Distanzbolzen 21 einen mit auf dem Kopfteil 1 der Filterpresse angeordneten Anschlag 45 für den benachbarten Distanzbolzen 21. Der Anschlag 45 besitzt eine Justierschraube 46 zum genauen Einstellen der Endlage des benachbarten Distanzbolzens 21. Jeder Distanzbolzen 21 besitzt eine axial verstellbare Justierschraube 47 zum Einstellen der Länge des Distanzbolzens 21. An der Preßplatte 4 ist eine um eine Achse 48 schwenkbare Wippe 49 angeordnet. Die Wippe 49 weist zwei gekrümmte Anlageflächen 50 und 51 auf, von denen die eine 50 am Kopf 32 der Stellschraube 31 und die andere 51 am Kopf der Justierschraube 47 anliegt.

Die Fig. 3 zeigt die aneinandergeschobenen Membranfilterplatten 5, wobei die Vorrichtung 3 zum Zusammenpressen derselben noch nicht wirksam ist. Mit $d_{o1}$ .... $d_{on}$ sind die Dicken der Membranfilterplatten 5 und mit $b_{o1}$ .... $b_{o(n-1)}$ sind die Breite der Spalten zwischen den benachbarten Filterplatten 5 bezeichnet. In den Spalten befinden sich die Randbereiche der nur in der Fig. 5 dargestellten Filtertücher 41. Mit $D_o$ ist die gesamte Dicke des aus den Membranfilterplatten 5 und den Filtertüchern gebildeten unbelasteten Stapels bezeichnet. Die Justierschraube 46 des Anschlages 45 und die Länge der einzelnen Distanzbolzen 21 sind mittels der Justierschrauben 47 so eingestellt, daß bei aneinanderstoßenden Distanzbolzen 21 sich die Wippe 49 in der in der Fig. 3 dargestellten Lage befindet, wobei auf die Wippe 49 nur die Rückführkraft der Druckfeder 28 des zur Wippe 49 benachbarten Blockgehäuses 17 einwirkt und alle Ventile geöffnet sind. Wird anschließend durch Betätigen der Vorrichtung 3 zum zusammenpressen der Membranfilterplatten 5 die Preßplatte 4 bezogen auf die Fig. 3 um den Betrag $D_\Delta$ der elastischen Einfederung der Membranfilterplatten 5 und der Filtertücher 41 nach links bewegt, so wird die Wippe 49 durch die aneinanderstoßenden Distanzbolzen 21 im Gegenuhrzeigersinn verschwenkt. Weil der Arm der Wippe 49, der auf den Kopf der Justierschraube 47 des Distanzbolzens 21 anliegt, kürzer ist als der Arm der Wippe 49, der auf den Kopf 32 der Stellschraube 31 des Kolbens 20 anliegt, ist die Strecke, um welche die Kolben 20 nach links bewegt werden, größer als die relative Verschiebung des Distanzbolzens 21 um die Strecke DΔ nach rechts.

Durch das Verschwenken der Wippe 49 werden die Kolben 20 aneinandergestoßen und in die Schließstellung verschoben, wie dies in der Fig. 2 dargestellt ist. Bei dieser Verschiebebewegung werden die inneren Enden der axialen Nuten 34 soweit nach links verschoben, bis diese Enden sich links von den Dichtungsringen 25 befinden. Dadurch ist der Durchgang von der Umfangsnut 22 zu den axialen Nuten 34 gesperrt und die Verbindung zwischen dem Druckraum 24 und der freien Atmosphäre unterbunden. Wenn die oben beschriebenen Ventile geschlossen sind, kann sich im Druckraum 24 ein Druck aufbauen, durch den ein zwischen den Filtertüchern 41 von zwei benachbarten Membranfilterplatten 5 befindlichen, nicht dargestellten Filterkuchen zusätzlich ausgepreßt wird.

Für den Betrieb der oben beschriebenen Filterpresse wird selbstverständlich vorausgesetzt, daß die durch die Vorrichtung 3 auf die Preßplatte 4 ausgeübte Kraft mit Sicherheit größer ist als die Summe der Kräfte, die durch die Pressung der Filterkuchen und dem Druckaufbau im Druckraum 24 auftreten, damit während dem eigentlichen Preßvorgang die oben beschriebenen Ventile geschlossen bleiben.

Wenn nach dem Preßvorgang die Zufuhr des Druckmediums durch den durch die Querbohrungen 35 gebildeten Zuführkanal unterbrochen wird und die Vorrichtung 3 eine abnehmende Kraft auf die Preßplatte 4 ausübt, wird die Wippe 49 im Uhrzeigersinn verschwenkt, was bewirkt, daß sich die Kolben 20 in den Blockgehäusen 17 durch die Rückführkraft der Druckfedern 28 bezogen auf die Fig. 2 nach rechts in die Offenstellung bewegen, bevor die von der Vorrichtung 3 auf die Preßplatte 4 ausgeübte Kraft einen bestimmten Wert unterschreitet. Damit wird dem unter dem Druck stehenden Medium in der Druckkammer 24 ermöglicht, sich schnell über den vorgeschriebenen Weg zu entspannen, wodurch unkontrollierbare und daher gefährliche Entspannungsvorgänge vermieden werden.

Selbstverständlich ist eine abweichende Ausführungsform denkbar, bei welcher der Anschlag 45 sich auf der Preßplatte 4 und die Wippe 49 auf dem Kopfteil 1 der Filterpresse befindet.

Weiter ist auch eine Ausführungsform der Membranfilterplatte 5 möglich, bei der sich die Kolben 20 und die Distanzbolzen 21 in Bohrungen im verbreiterten Rahmenbereich 14 befinden. Die in den Fig. 1 bis 5 dargestellte Ausführungsform ist insbesondere für die nachträgliche Ausrüstung von bestehenden Membranfilterplatten gedacht.

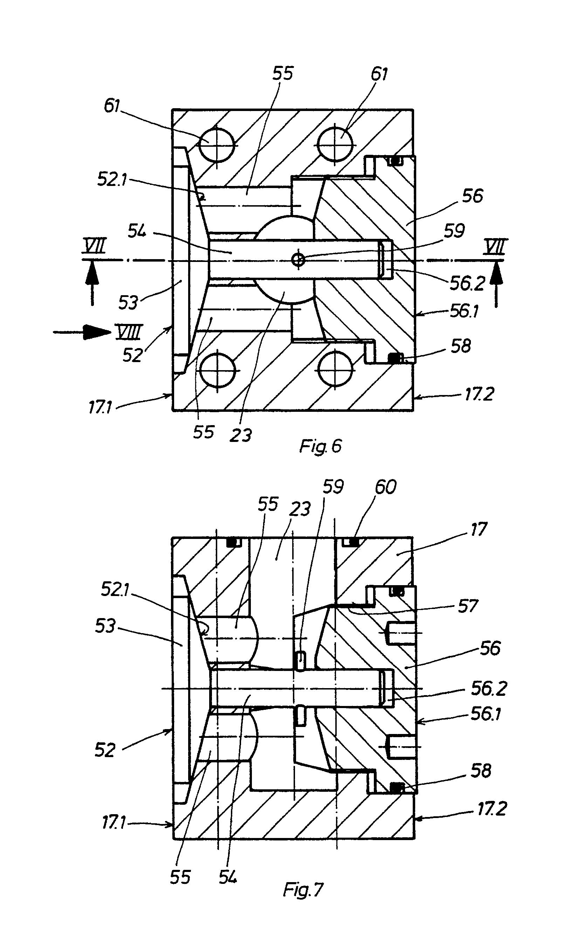

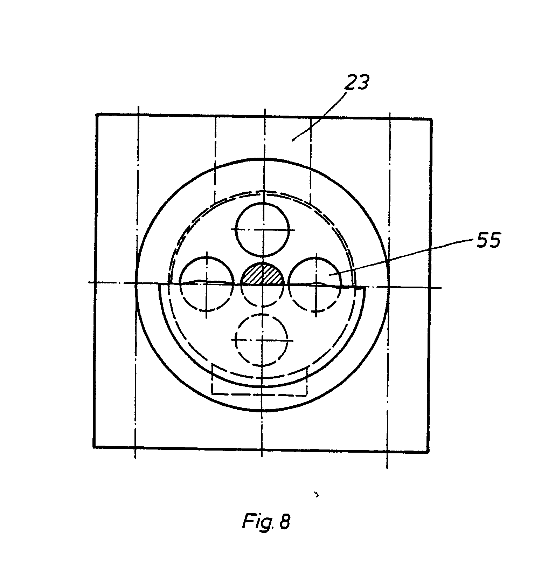

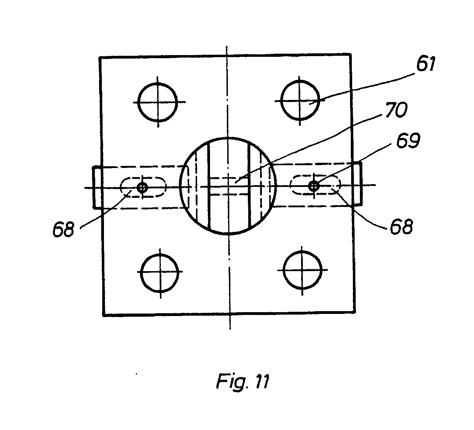

Letzteres gilt entsprechend für zwei weitere Ausführungsformen, die im einzelnen in den Fig. 6 bis 11 dargestellt sind, wobei hier jeweils nur das Blockgehäuse 17 wiedergegeben ist.

In der Ausführungsform nach den Fig. 6 bis 8 weist ebenfalls jede Membranfilterplatte 5 jeweils ein, in einem Blockgehäuse 17 angeordnetes Ventil 52 auf, dessen Ventilteller 53 auf einem axial in Schließrichtung der Filterpresse verstellbaren Kolben 54 angeordnet ist. In geschlossenem Zustand schließt das Ventil 52 mit seiner der Dichtfläche 52.1 abgewandten Stirnseite etwa bündig mit der einen Seitenfläche 17.1 des Blockgehäuses 17 ab, wobei die Breite des Blockgehäuses 17 in Richtung des Ventilhubs der Dicke der Membranfilterplatte 5 entspricht. In die Fläche des Ventilsitzes münden vier sich im wesentlichen in axialer Richtung des Kolbens 54 erstreckende Bohrungen 55, die mit zu einem quer zum Kolben 54 verlaufenden Kanal 23 und über diesen mit dem Raum 24 zwischen den Membranen 39, 40 der Membranfilterplatten 5 in Verbindung steht.

Dem Ventilteller 53 gegenüberstehend ist auf der anderen Seitenfläche 17.2 des Blockgehäuses 17 ein in axialer Richtung des Kolbens 54 ver- und feststellbarer Distanzbolzen 56 vorgesehen, dessen außenseitige Stellfläche 56.1 dem Ventilteller 53 der benachbarten Membranfilterplatte 5 anliegt und unter dem Preßdruck der Filterpresse dieses Ventil 52 geschlossen hält. Der Distanzbolzen 56 ist zu seiner axialen Verstellung mantelseitig mit einem Außengewinde 57 versehen, das in ein entsprechendes Innengewinde im Blockgehäuse 17 greift. Ferner weist der Distanzbolzen 56 an seiner Mantelfläche eine Ringnut 58 für einen gegen das Blockgehäuse 17 abdichtenden Dichtring auf. Um den Verstellhub des Kolbens 54 zu begrenzen bzw. ein Herausfallen aus dem Blockgehäuse 17 zu verhindern, ist der Kolben 54 mit einem in einer quer zu seiner Achse verlaufenden Bohrung angeordneten Kerbstift 59 versehen.

Der Distanzbolzen 56 ist auf seiner der Stellfläche 56.1 abgewandten Seite mit einer axialen Aufnahmebohrung 56.2 für den Kolben 54 versehen, die dessen endseitiger Führung dient. Die Dichtfläche 52.1 des Ventiltellers 53 weist eine kegelstumpfförmige Gestalt auf, wodurch eine selbsttätige Zentrierung der Dichtfläche 52.1 auf dem Ventilsitz bei Druckbeaufschlagung der Filterpresse erreicht wird. Das im Ausführungsbeispiel an die Membranfilterplatte 5 angesetzte Blockgehäuse 17 ist über einen weiteren Dichtring 60 gegen die Membranfilterplatte abgedichtet, wobei die Bohrungen 61 für eine Befestigung in bekannter Weise vorgesehen sind.

Wie in dem bereits ausführlich beschriebenen ersten Ausführungsbeispiel werden auch hier die einzelnen Entlastungsventile 52 über die jeweils angrenzenden Distanzbolzen 56 geschlossen gehalten, so lange die Filterpresse unter Druck steht. Kommt es jedoch zu einem betriebsmäßig nicht vorgesehenen Abfall des Schließdrucks, so lange die Filterkammern unter Preßdruck stehen, so heben die unter dem Preßdruck stehenden Ventilteller 53 von ihrem Ventilsitz ab und sorgen für eine schnelle Entlastung der Filterkammern.

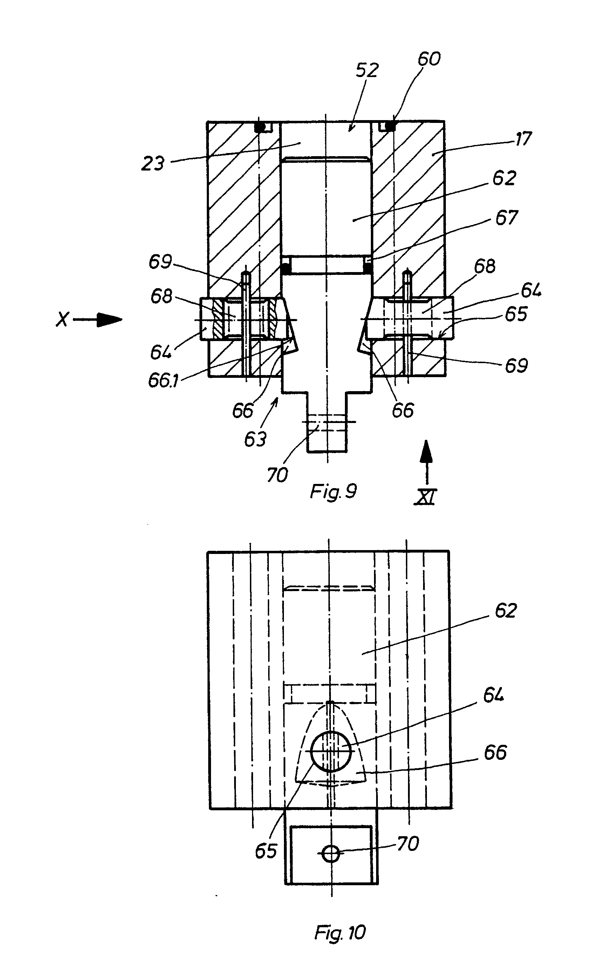

Eine weitere, einen besonders schnellen Druckabbau ermöglichende Ausführungsform ist in den Fig. 9 bis 11 dargestellt, bei der wieder jede Membranfilterplatte 5 jeweils ein in einem randseitig angeschlossenen Blockgehäuse 17 angeordnetes Ventil 52 aufweist. Hier ist das Ventil von einem im wesentlichen zylindrischen Verschlußstopfen 62 gebildet, der axial verschiebbar in einem sich durch das Blockgehäuse erstreckenden Kanal 23 geführt ist, der im wesentlichen parallel zur Ebene der Membranen 39, 40 verläuft. Das eine Ende des Kanals 23 steht wieder mit dem Raum 24 zwischen den Membranen 39, 40 der Membranfilterplatten 5 in Verbindung, während dessen anderes ende bei 63 unmittelbar ins Freie mündet.

Zu beiden Seiten des Verschlußstopfens 62 ist je ein Distanzbolzen 64 angeordnet, die beide in einer den Kanal 23 zentrisch und rechtwinklig schneidenden Führungsbohrung 65 angeordnet sind. Diese Distanzbolzen 64 greifen jeweils in eine Keilausnehmung 66 des Verschlußstopfens 62, wobei die Keilfläche 66.1 auf der der Membranfilterplatte 5 zugewandten Seite in die Mantelfläche des Verschlußstpfens 62 einmündet. Die dem Verschlußstopfen 62 anliegenden Stirnflächen der Distanzbolzen 64 weisen der Keilausnehmung angepaßte Keilschrägen auf, so daß eine verschleißfreie Verstellung des Verschlußstopfens 62 durch die Distanzbolzen 64 gewährleistet ist.

So lange die Membranfilterplatten 5 unter dem Schließdruck der Filterpresse stehen, ist der von dem Preßdruck aus dem Inneren der Membranfilterplatten 5 beaufschlagte Verschlußstopfen 62 durch die Distanzbolzen 64 am Austreten aus dem Kanal 23 gehindert. Läßt jedoch der Schließdruck nach, so daß der Verschlußstopfen 62 über seine Keilflächen 66.1 die Distanzbolzen 64 jeweils zur Stirnseite des Blockgehäuses 17 hin verstellen kann, so wird der Verschlußstopfen 62, sobald die Distanzbolzen 64 vollständig aus dem Querschnitt des Kanals 23 herausgetreten sind, durch den Preßdruck aus dem Kanal 23 hinausgedrückt. Da somit der gesamte Querschnitt des Kanals 23 für die Belüftung zur Verfügung steht, führt dies zu einem schnellen Druckabbau im Innern der Membranfilterplatte 5.

Der Vershlußstopfen 62 ist zwischen seinem der Membranfilterplatte 5 zugewandten Ende und den Keilausnehmungen 66 an seiner Mantelfläche mit einer Ringnut 67 für einen den Verschlußstopfen 62 gegen das Blockgehäuse 17 abdichtenden Dichtring versehen. Ferner weisen die Distanzbolzen 64 jeweils eine sich in axialer Richtung erstreckende Schlitzausnehmung 68 auf, durch die hindurch zu deren Hubbegrenzung und drehfesten Lagerung ein im Blockgehäuse 17 feststehender Kerbstift 69 greift. Schließlich ist der Verschlußstopfen 62 an seinem aus dem Blockgehäuse 17 vorstehenden Ende mit einem Anschlußglied 70 für eine Sicherungskette oder dergl. versehen, um zu verhindern, daß der Verschlußstopfen 62 im Störungsfall nach dem Austreten aus dem Kanal 23 geschoßartig davonfliegt und dadurch Beschädigungen oder Verletzungen hervorrufen kann.

## Patentansprüche

1. Filterpresse mit einer Anzahl Membranfilterplatten (5), die zwischen einem ortsfesten Kopfteil (1) und einer Preßplatte (4) verschiebbar angeordnet sind, einer Vorrichtung (3) zum Zusammenpressen der Membranfilterplatten zwischen dem Kopfteil und der Preßplatte, und einer Vorrichtung zum Zuführen eines gasförmigen Mediums unter Druck zu den Membranen der Membranfilterplatten, mit einer eine Anzahl Ventile (18, 20, 28, 34) aufweisenden Einrichtung (16) zum beschleunigten Entspannen des gasförmigen Druckmediums in den Membranfilterplatten (5), wobei jeder Membranfilterplatte eines der genannten Ventile (18, 20, 28, 34) zugeordnet ist und die Einrichtung (16) Mittel (21, 45, 46, 47, 49) zum automatischen Schließen der Ventile (18, 20, 28, 34) aufweist, wenn die Membranfilterplatten zusammengepreßt werden und zum automatischen öffnen der Ventile (18, 20, 28, 34), wenn der Plattenabstand durch Nachlassen des von der Vorrichtung (3) auf die Membranfilterplatten ausgeübten Schließdrucks zunimmt, dadurch gekennzeichnet, daß jedes Ventil einen in einer Bohrung (18) verschiebbaren Kolben (20) und eine Ventilfeder (28) zum öffnen des Ventils, wenn keine von dem Schließdruck herrührenden äußeren Kräfte auf den Kolben (20) einwirken, aufweist, daß in der Bohrung (18) eine radial nach außen verlaufende Umfangsnut (22) vorhanden ist, die über einen Kanal (23) mit dem Raum (24) zwischen den Membranen (39, 40) der Membranfilterplatten in Verbindung steht; und daß im genannten Kolben (20) wenigstens eine axial verlaufende Nut (34) vorhanden ist, durch welche das gasförmige Medium in die umgebende Atmosphäre strömt, wenn das Ventil geöffnet ist.

2. Filterpresse nach Anspruch 1, dadurch gekennzeichnet, daß beidseits der Umfangsnut (22) je eine weitere Umfangsnut zur Aufnahme je eines Dichtungsringes (25) vorhanden ist, daß jeder Kolben (20) eine axiale Sackbohrung (30) oder Durchgangsbohrung aufweist, daß wenigstens im der axial verlaufenden Nut (34) abgewandten Endbereich der genannten Bohrung (30) ein Innengewinde (29) vorhanden ist, in das eine Stellschraube (31) mit einem flachen Kopf (32) zum Verstellen der Länge des Kolbens (20) eingeschraubt ist, und daß der flache Kopf als Anschlag für die Ventilfeder (28) dient.

3. Filterpresse nach einem der Ansprüche 1 oder 2, dadurch gekennzeichnet, daß die Mittel (21, 45, 46, 47, 49) zum Schließen und öffnen der Ventile (18, 20, 28, 34) eine Anzahl Distanzbolzen (21), eine um eine Achse (48) schwenkbare Wippe (49) und einen Anschlag (45) umfassen.

4. Filterpresse nach Anspruch 3, dadurch gekennzeichnet, daß jeder Distanzbolzen (21) in einer Bohrung (19) verschiebbar angeordnet ist und ein Innengewinde aufweist, in das eine Justierschraube (47) zum Einstellen der Länge des Distanzbolzens (21) eingeschraubt ist.

5. Filterpresse nach Anspruch 3 oder 4, dadurch gekennzeichnet, daß die Kolben (20) längs einer ersten Geraden einer Reihe angeordnet sind, daß die Distanzbolzen (21) und der genannte Anschlag (45) längs einer zweiten im wesentlichen zur ersten Geraden parallelen Geraden angeordnet sind, daß die Achse (48), um welche die Wippe (49) schwenkbar ist, entweder im Kopfteil (1) oder an der Preßplatte (4) und der genannte Anschlag (45) an der Preßplatte (4) oder am Kopfteil (1) befestigt ist.

6. Filterpresse nach einem der Ansprüche 3 bis 5, dadurch gekennzeichnet, daß je einer der Kolben (20) und je einer der Distanzbolzen (21) in entsprechenden Bohrungen in einem von einer Anzahl Blockgehäusen (17) verschiebbar angeordnet sind, und daß in einem Eckbereich und an einer der Schmalseiten jeder Membranfilterplatte (5) eines der Blockgehäuse (17) angeordnet ist.

7. Filterpresse nach Anspruch 6, dadurch gekennzeichnet, daß in der an der Schmalseite (38) anliegenden Fläche des Blockgehäuses eine kreisrunde Ausnehmung (43) vorhanden ist, daß im Randbereich der Ausnehmung ein Dichtungsring (44) angeordnet ist, daß der Innenraum der Ausnehmung (43) einerseits über wenigstens eine Bohrung (23) im Blockgehäuse mit der Umfangsnut (22) und andererseits über eine Sackbohrung (37) im Randbereich der zugeordneten Membranfilterplatte (5) mit dem Raum (24) zwischen den Membranen (39, 40) der Membranfilterplatten (5) in Verbindung steht.

8. Filterpresse mit einer Anzahl Membranfilterplatten (5), die zwischen einem ortsfesten Kopfteil (1) und einer Preßplatte (4) verschiebbar angeordnet sind, einer Vorrichtung (3) zum Zusammenpressen der Membranfilterplatten zwischen dem Kopfteil und der Preßplatte, und einer Vorrichtung zum Zuführen eines gasförmigen Mediums unter Druck zu den Membranen der Membranfilterplatten, mit einer eine Anzahl Ventile (52) aufweisenden Einrichtung (16) zum beschleunigten Entspannen des gasförmigen Druckmediums in den Membranfilterplatten (5), wobei jeder Membranfilterplatte eines der genannten Ventile (52) zugeordnet ist und die Einrichtung (16) Mittel (21, 45, 46, 47, 49) zum automatischen Schließen der Ventile (52) aufweist, wenn die Membranfilterplatten zusammengepreßt werden und zum automatischen Öffnen der Ventile (52), wenn der Plattenabstand durch Nachlassen des von der Vorrichtung (3) auf die Membranfilterplatten ausgeübten Schließdrucks zunimmt, dadurch gekennzeichnet, daß jedes Ventil (52) in einem randseitig angeschlossenen Blockgehäuse (17) und der Ventilteller (53) des Ventils (52) auf einem axial in Schließrichtung der Filterpresse verstellbaren Kolben (54) angeordnet ist und in geschlossenem Zustand mit seiner der Dichtfläche (52.1) abgewandten Stirnfläche etwa bündig mit der einen Seitenfläche (17.1) des Blockgehäuses (17) abschließt, wobei in die Fläche des Ventilsitzes mindestens eine sich im wesentlichen in axialer Richtung des Kolbens (54) erstreckende Bohrung (55) mündet, die mit zu einem quer zum Kolben (54) verlaufenden Kanal (23) und über diesen mit dem Raum (24) zwischen den Membranen (39, 40) der Membranfilterplatten (5) in Verbindung steht, und daß dem Ventilteller (53) gegenüberstehend auf der anderen Seitenfläche des Blockgehäuses (17) ein in axialer Richtung des Kolbens (54) ver- und feststellbarer Distanzbolzen (56) vorgesehen ist, dessen außenseitige Stellfläche dem Ventilteller (53) der benachbarten Membranfilterplatte (5) anliegt und unter dem Preßdruck der Filterpresse das Ventil (52) geschlossen hält.

9. Filterpresse nach Anspruch 8, dadurch gekennzeichnet, daß der Distanzbolzen (56) zu seiner axialen Verstellung mantelseitig mit einem Außengewinde (57) versehen ist, das in ein entsprechendes Innengewinde im Blockgehäuse (17) greift und an seiner Mantelfläche eine Ringnut (58) für einen den Distanzbolzen (56) gegen das Blockgehäuse (17) abdichtenden Dichtring aufweist.

10. Filterpresse nach den Ansprüchen 8 und 9, dadurch gekennzeichnet, daß der Kolben (54) mit einem seinen Verstellhub begrenzenden, in einer quer zu seiner Achse verlaufenden Bohrung angeordneten Kerbstift (59) versehen ist.

11. Filterpresse nach den Ansprüchen 8 bis 10, dadurch gekennzeichnet, daß der Distanzbolzen (56) auf seiner der Stellfläche abgewandte Seite mit einer axialen Aufnahmebohrung (56.2) für den Kolben (54) versehen ist.

12. Filterpresse nach den Ansprüchen 8 bis 11, dadurch gekennzeichnet, daß die Dichtfläche (52.1) des Ventiltellers (53) eine kegelstumpfförmige Gestalt aufweist.

13. Filterpresse mit einer Anzahl Membranfilterplatten (5), die zwischen einem ortsfesten Kopfteil (1) und einer Preßplatte (4) verschiebbar angeordnet sind, einer Vorrichtung (3) zum Zusammenpressen der Membranfilterplatten zwischen dem Kopfteil und der Preßplatte, und einer Vorrichtung zum Zuführen eines gasförmigen Mediums unter Druck zu den Membranen der Membranfilterplatten, mit einer eine Anzahl Ventile (52) aufweisenden Einrichtung (16) zum beschleunigten Entspannen des gasförmigen Druckmediums in den Membranfilterplatten (5), wobei jeder Membranfilterplatte eines der genannten Ventile (52) zugeordnet ist und die Einrichtung (16) Mittel (21, 45, 46, 47, 49) zum automatischen Schließen der Ventile (52) aufweist, wenn die Membranfilterplatten zusammengepreßt werden und zum automatischen Öffnen der Ventile (52), wenn der Plattenabstand durch Nachlassen des von der Vorrichtung (3) auf die Membranfilterplatten ausgeübten Schließdrucks zunimmt, dadurch gekennzeichnet, daß jedes Ventil (52) in einem randseitig angeschlossenen Blockgehäuse (17) angeordnet ist, wobei das Ventil (52) von einem im wesentlichen zylindrischen Verschlußstopfen (62) gebildet ist, der axial verschiebbar in einem sich durch das Blockgehäuse (17) erstreckenden Kanal (23) geführt ist, der im wesentlichen parallel zur Ebene der Membranen (39, 40) verläuft, und dessen eines Ende mit dem Raum (24) zwischen den Membranen (39, 40) der Membranfilterplatten (5) in Verbindung steht, während dessen anderes Ende ins Freie mündet, und daß zu beiden Seiten des Verschlußstopfens (62) je ein Distanzbolzen (64) angeordnet ist, die beide in einer den Kanal (23) zentrisch und rechtwinklig schneidenden Führungsbohrung (65) angeordnet sind und jeweils in eine Keilausnehmung (66) des Verschlußstopfens (62) greifen, wobei die Keilfläche (66.1) auf der der Membranfilterplatte (5) zugewandten Seite in die Mantelfläche des Verschlußstopfens (62) einmündet und die dem Verschlußstopfen (62) anliegenden Stirnflächen der Distanzbolzen (64) der Keilausnehmung (66) angepaßte Keilschrägen aufweisen.

14. Filterpresse nach Anspruch 13, dadurch gekennzeichnet, daß der Verschlußstopfen (62) zwischen seinem der Membranfilterplatte (5) zugewandten Ende und den Keilausnehmungen (66) an seiner Mantelfläche mit einer Ringnut (67) für einen den Verschlußstopfen (62) gegen das Blockgehäuse (17) abdichtenden Dichtring versehen ist.

15. Filterpresse nach Anspruch 13 oder 14, dadurch gekennzeichnet, daß die Distanzbolzen (64) jeweils eine sich in axialer Richtung erstreckende Schlitzausnehmung (68) aufweisen, durch die hindurch zu deren Hubbegrenzung und drehfesten Lagerung ein im Blockgehäuse (17) feststehender Kerbstift (69) greift.

16. Filterpresse nach den Ansprüchen 13 bis 15, dadurch gekennzeichnet, daß der Distanzbolzen (64) eine etwas größere Länge als der ihn aufnehmende Teil der Führungsbohrung (65) aufweist.

17. Filterpresse nach den Ansprüchen 13 bis 16, dadurch gekennzeichnet,daß der Verschlußstopfen (62) an seinem aus dem Blockgehäuse (17) vorstehenden Ende mit einem Anschlußglied (70) für eine Sicherungskette oder dergl. versehen ist.

**Claims**

1. A filter press comprising a number of diaphragm filter plates (5) which are arranged displaceably between a stationary head portion (1) and a pressing plate (4), a device (3) for compressing the diaphragm filter plates between the head portion and the pressing plate, and a device for supplying a gaseous medium under pressure to the diaphragms of the diaphragm filter plates, comprising a device (16) having a number of valves (18, 20, 28, 34) for accelerated relief of the gaseous pressure medium in the diaphragm filter plates (5), wherein one of said valves (18, 20, 28, 34) is associated with each diaphragm filter plate and the device (16) has means (21, 45, 46, 47, 49) for automatic closure of the valves (18, 20, 28, 34) when the diaphragm filter plates are compressed and for automatic opening of the valves (18, 20, 28, 34) when the plate spacing increases by virtue of relief of the closure pressure applied to the diaphragm filter plates by the device (3), characterised in that each valve has a piston (20) slidable in a bore (18) and a valve spring (28) for opening the valve when no external forces originating from the closing pressure are acting on the piston, that provided in the bore (18) is a radially outwardly extending peripheral groove (22) which communicates by way of a duct (23) with the space (24) between the diaphragms (39, 40) of the diaphragm filter plates; and that provided in said piston (20) is at least one axially extending groove (34) through which the gaseous medium flows into the ambient atmosphere when the valve is opened.

2. A filter press according to claim 1 characterised in that provided on each side of the peripheral groove (22) is a respective further peripheral groove for receiving a respective sealing ring (25), that each piston (20) has an axial blind bore (30) or through bore, that provided at least in the end region of said bore (30), which is remote from the axially extending groove (34), is an internal screwthread (29) into which is screwed an adjusting screw (31) with a flat head (32) for adjusting the length of the piston (20), and that the flat head serves as an abutment for the valve spring (28).

3. A filter press according to one of claims 1 and 2 characterised in that the means (21, 45, 46, 47, 49) for closing and opening of the valves (18, 20, 28, 34) include a number of spacer pins (21), a rocker member (49) which is pivotable about an axis (48) and an abutment (45).

4. A filter press according to claim 3 characterised in that each spacer pin (21) is arranged displaceably in a bore (19) and has an internal screwthread into which is screwed an adjusting screw (47) for adjusting the length of the spacer pin (21).

5. A filter press according to claim 3 or claim 4 characterised in that the pistons (20) are arranged along a first straight line of a row, that the spacer pins (21) and said abutment (45) are arranged along a second straight line which is substantially parallel to the first straight line, that the axis member (48) about which the rocker member (49) is pivotable is fixed either in the head portion (1) or to the pressing plate (4) and said abutment (45) is fixed to the pressing plate (4) or to the head portion (1).

6. A filter press according to one of claims 3 to 5 characterised in that a respective one of the pistons (20) and a respective one of the spacer pins (21) are arranged displaceably in corresponding bores in one of a number of block housings (17), and that one of the block housings (17) is arranged in each corner region and at one of the narrow sides of each diaphragm filter plate (5).

7. A filter press according to claim 6 characterised in that a round opening (43) is provided in the surface of the block housing which bears against the narrow side (38), that a sealing ring (44) is disposed in the edge region of the opening, that the interior of the opening (43) is communicated on the one hand by way of at least one bore (23) in the block housing with the peripheral groove (22) and on the other hand by way of a blind bore (37) in the edge region of the associated diaphragm filter plate (5) with the space (24) the diaphragms (39, 40) of the diaphragm filter plates (5).

8. A filter press comprising a number of diaphragm filter plates (5) which are arranged displaceably between a stationary head portion (1) and a pressing plate (4), a device (3) for compressing the diaphragm filter plates between the head portion and the pressing plate, and a device for supplying a gaseous medium under pressure to the diaphragms of the diaphragm filter plates, comprising a device (16) having a number of valves (52) for accelerated relief of the gaseous pressure medium in the diaphragm filter plates (5), wherein one of said valves (52) is associated with each diaphragm filter plate and the device (16) has bans (21, 45, 46, 47, 49) for automatic closure of the valves (52) when the diaphragm filter plates are compressed and for automatic opening of the valves (52) when the plate spacing increases by relief of the closure pressure applied to the diaphragm filter plates by the device (3), characterised in that each valve (52) is arranged in a block housing (17) connected to the edge and the valve plate (53) of the valve (52) is arranged on a piston (54) displaceable axially in the closing direction of the filter press, and in the closed condition terminates with its end face remote from the sealing surface (52.1) substantially flush with the one side surface (17.1) of the block housing (17), wherein opening into the surface of the valve seat is at least one bore (55) which extends substantially in the axial direction of the piston (54) and which communicates with a duct (23) extending transversely to the piston (54) and by way of said duct with the space (24) between the diaphragms (39, 40) of the diaphragm filter plates (5), and that disposed in opposite relationship to the valve plate (53) on the other side surface of the block housing (17) is a spacer pin (56) which can be displaced and fixed in the axial direction of the piston (54) and whose outward control surface bears against the valve plate (53) of the adjacent diaphragm filter plate (5) and holds the valve (52) closed under the pressing pressure of the filter press.

9. A filter press according to claim 8 characterised in that for its axial displacement the spacer pin (56) is provided at its peripheral surface with an external screwthread (57) which engages into a corresponding internal screwthread in the block housing (17) and at its peripheral surface has an annular groove (58) for a sealing ring for sealing the spacer pin (56) relative to the block housing (17).

10. A filter press according to claims 8 and 9 characterised in that the piston (54) is provided with a notched pin (59) for restricting the stroke movement of the piston, the pin being disposed in a bore extending transversely with respect to the piston axis.

11. A filter press according to claims 8 to 10 characterised in that on its side remote from the control surface the spacer pin (56) is provided with an axial receiving bore (56.2) for the piston (54).

12. A filter press according to claims 8 to 11 characterised in that the sealing surface (52.1) of the valve plate (53) is of a frustoconical configuration.

13. A filter press comprising a number of diaphragm filter plates (5) which are arranged displaceably between a stationary head portion (1) and a pressing plate (4), a device (3) for compressing the diaphragm filter plates between the head portion and the pressing plate, and a device for supplying a gaseous medium under pressure to the diaphragms of the diaphragm filter plates, comprising a device (16) having a number of valves (52) for accelerated relief of the gaseous pressure medium in the diaphragm filter plates (5), wherein one of said valves (52) is associated with each diaphragm filter plate and the device (16) has bans (21, 45, 46, 47, 49) for automatic closure of the valves (52) when the diaphragm filter plates are compressed and for automatic opening of the valves (52) when the plate spacing increases by relief of the closure pressure applied to the diaphragm filter plates by the device (3), characterised in that each valve (52) is arranged in a block housing (17) connected at the edge, wherein the valve (52) is formed by a substantially cylindrical closure plug (62) which is guided axially displaceably in a duct (23) which extends through the block housing (17) and which is substantially parallel to the plane of the diaphragms (39, 40) and of which one end communicates with the space (24) between the diaphragms (39, 40) of the diaphragm filter plates (5) while the other end thereof opens into the open air, and that arranged at each of the two sides of the closure plug (62) is a respective spacer pin (64), which are both arranged in a guide bore (65) which intersects the duct (23) centrally and at a right angle, and each engage into a taper recess (66) in the closure plug (62), wherein the taper surface (66,1) on the side which is towards the diaphragm filter plate (5) opens to the peripheral surface of the closure plug (62) and the end faces of the spacer pins (64), which bear against the closure plug (62), have taper bevels adapted to the taper recess (66).

14. A filter press according to claim 13 characterised in that between its end towards the diaphragm filter plate (5) and the taper recesses (66) the closure plug (62) is provided at its peripheral surface with an annular groove (67) for a sealing ring for sealing off the closure plug (62) relative to the block housing (17).

15. A filter press according to claim 13 or claim 14 characterised in that the spacer pins (64) each have an axially extending slot opening (68) through which engages a notched pin (69) which is fixed in the block housing (17), for restricting the stroke movement of the spacer pins and for non-rotatably mounting same.

16. A filter press according to claim 13 to 15 characterised in that the spacer pin (64) is of a somewhat greater length than the part of the guide bore (65) which accommodates it.

17. A filter press according to claims 13 to 16 characterised in that at its end projecting from the block housing (17) the closure plug (62) is provided with a connecting member (70) for a safety chain or the like.

## Revendications

1. Filtre-presse, comprenant une pluralité de plaques de filtre à diaphragme (5) disposées de manière mobile entre un élément de tête stationnaire (1) et un plateau de serrage (4), un dispositif (3) pour la compression des plaques de filtre à diaphragme entre l'élément de tête et le plateau de serrage, et un dispositif pour l'amenée d'un fluide gazeux sous pression vers les diaphragmes des plaques de filtres à diaphragme, ainsi qu'un dispositif (16) muni d'une pluralité de soupapes (18, 20, 28, 34) et assurant la détente rapide du fluide gazeux sous pression dans les plaques de filtre à diaphragme (5), à chaque plaque de filtre à diaphragme étant associée l'une desdites soupapes (18, 20, 28, 34) et le dispositif (16) comportant des moyens (21, 45, 46, 47, 49) pour la fermeture automatique des soupapes (18, 20, 28, 34) lorsque les plaques de filtre à diaphragme sont comprimées et pour l'ouverture automatique des soupapes (18, 20, 28, 34) lorsque l'écartement des plaques augmente à la suite de la diminution de la pression exercée par le dispositif (3) sur les plaques de filtre à diaphragme, **caractérisé par le fait** que chaque soupape comprend un piston (20) déplaçable dans un alésage (18) et un ressort de soupape (28) pour l'ouverture de la soupape lorsqu'aucune force extérieure provenant de la pression de fermeture n'agit sur le piston (20); que dans l'alésage (18) est prévue une rainure circonférentielle (22) qui s'étend radialement vers l'extérieur et communique par l'intermédiaire d'un canal (23) avec l'espace (24) entre les diaphragmes (39, 40) des plaques de filtre à diaphragme; et que dans ledit piston (20) est prévue au moins une rainure (34) d'extension axiale par laquelle le fluide gazeux s'échappe dans l'atmosphère ambiante lorsque la soupape est ouverte.

2. Filtre-presse selon la revendication 1, caractérisé par le fait que de part et d'autre de la rainure circonférentielle (22) est respectivement prévue une autre rainure circonférentielle pour la réception d'un joint d'étanchéité (25); que chaque piston (20) comprend un trou borgne (30) axial ou un alésage de passage; qu'il comprend, au moins dans la section terminale dudit alésage (30) opposée à la rainure (34) d'extension axiale, un filetage intérieur (29) dans lequel est vissée une vis de réglage (31) à tête plate (32) pour modifier la longueur du piston (20); et que la tête plate sert de butée pour le ressort de soupape (28).

3. Filtre-presse selon l'une des revendications 1 ou 2, caractérisé par le fait que les moyens (21, 45, 46, 47, 49) pour la fermeture et l'ouverture des soupapes (18, 20, 28, 34) comprennent une pluralité de boulons d'écartement (21), une bascule (49) pouvant être pivotée autour d'un axe (48), et une butée (45).

4. Filtre-presse selon la revendication 3, caractérisé par le fait que chaque boulon d'écartement (21) est disposé de manière mobile dans un alésage (19) et comporte un filetage intérieur dans lequel est vissée une vis d'ajustage (47) pour le réglage de la longueur du boulon d'écartement (21).

5. Filtre-presse selon l'une des revendications 3 ou 4, caractérisé par le fait que les pistons (20) sont disposés le long d'une première droite d'une série; que les boulons d'écartement (21) et ladite butée (45) sont disposés le long d'une seconde droite sensiblement parallèle à la première droite; que l'axe (48) autour duquel peut pivoter la bascule (49) est fixé soit dans l'élément de tête (1), soit sur le plateau de serrage (4) et que ladite butée (45) est fixée sur le plateau de serrage (4) ou sur l'élément de tête (1).

6. Filtre-presse selon l'une des revendications 3 à 5, caractérisé par le fait que respectivement l'un des pistons (20) et respectivement l'un des boulons d'écartement (21) sont disposés de manière mobile dans des alésages correspondants dans l'un d'une pluralité de carters monoblocs (17); et que dans une zone d'angle et sur l'un des petits côtés de chaque plaque de filtre à diaphragme (5) est disposé l'un des carters monoblocs (17).

7. Filtre-presse selon la revendication 6, caractérisé par le fait que dans la surface du carter monobloc appliquée contre le petit côté (38) est ménagé un évidement circulaire (43); que dans la région marginale de l'évidement est disposé un joint d'étanchéité (44); que l'espace intérieur de l'évidement (43) communique, d'une part par l'intermédiaire d'au moins un alésage (23) dans le carter monobloc, avec la rainure circonférentielle (22) et d'autre part, par l'intermédiaire d'un trou borgne (37) dans la région marginale de la plaque de filtre à diaphragme (5) associée, avec l'espace (24) entre les diaphragmes (39, 40) des plaques de filtre à diaphragme (5).

8. Fitre-presse, comprenant une pluralité de plaques de filtre à diaphragme (5) disposées de manière mobile entre un élément de tête stationnaire (1) et un plateau de serrage (4), un dispositif (3) pour la compression des plaques de filtre à diaphragme entre l'élément de tête et le plateau de serrage, et un dispositif pour l'amenée d'un fluide gazeux sous pression vers les diaphragmes des plaque de filtres à diaphragme, ainsi qu'un dispositif (16) muni d'une pluralité de soupapes (52) et assurant la détente rapide du fluide gazeux sous pression dans les plaques de filtre à diaphragme (5), à chaque plaque de filtre à diaphragme étant associée l'une desdites soupapes (52) et le dispositif (16) comportant des moyens (21, 45, 46, 47, 49) pour la fermeture automatique des soupapes (52) lorsque les plaques de filtre à diaphragme sont comprimées et pour l'ouverture automatique des soupapes (52) lorsque l'écartement des plaques augmente à la suite de la diminution de la pression exercée par le dispositif (3) sur les plaques de filtre à diaphragme, caractérisé par le fait que chaque soupape (52) est disposée dans un carter monobloc (17) raccordé latéralement et que la tête (53) de la soupape (52) est montée sur un piston (54) déplaçable axialement dans la direction de fermeture du filtre-presse et dont la face frontale opposée à la surface d'étanchéité (52.1) est sensiblement raccordée, à l'état fermé, à l'une des surfaces latérales (17.1) du carter monobloc (17), dans la surface de la tête de soupape débouchant au moins un alésage (55) qui s'étend sensiblement dans le sens axial du piston (54) et communique avec un canal (23) lequel s'étend transversalement au piston (54) et, par l'intermédiaire de celui-ci, avec un espace (24) entre les diaphragmes (39, 40) des plaques de filtre à diaphragme (5); et qu'en face de la tête de soupape (53) est prévu, sur l'autre face latérale du carter monobloc (17), un boulon d'écartement (56) qui peut être réglé et bloqué dans le sens axial du piston (54) et dont la surface de réglage extérieure est appliquée contre la tête de soupape (53) de la plaque de filtre à diaphragme (5) voisine et maintient la soupape (52) dans la position de fermeture sous l'effet de compression du filtre-presse.

9. Filtre-presse selon la revendication 8, caractérisé par le fait que, pour son déplacement axial, le boulon d'écartement (56) est muni sur sa surface latérale d'un filetage extérieur (57) qui coopère avec un filetage intérieur correspondant dans le carter monobloc (17) et présente sur sa surface latérale une rainure annulaire (58) pour un joint d'étanchéité assurant l'étanchéité entre le boulon d'écartement (56) et le carter monobloc (17).

10. Filtre-presse selon l'une des revendications 8 et 9, caractérisé par le fait que le piston (54) est muni d'une goupille cannelée (59) qui limite sa course de réglage et est disposée dans un alésage s'étendant transversalement par rapport à son axe.

11. Filtre-presse selon l'une des revendications 8 à 10, caractérisé par le fait que le boulon d'écartement (56) présente sur sa face opposée à la surface de réglage un alésage axial (56.2) pour la réception du piston (54).

12. Filtre-presse selon l'une des revendications 8 à 11, caractérisé par le fait que la surface d'étanchéité (52.1) de la tête de soupape (53) présente une forme tronconique.

13. Filtre-presse, comprenant une pluralité de plaques de filtre à diaphragme (5) disposées de manière mobile entre un élément de tête stationnaire (1) et un plateau de serrage (4), un dispositif (3) pour la compression des plaques de filtre à diaphragme entre l'élément de tête et le plateau de serrage, et un dispositif pour l'amenée d'un fuide gazeux sous pression vers les diaphragmes des plaques de filtre à diaphragme, ainsi qu'un dispositif (16) muni d'une pluralité de soupapes (52) et assurant la détente rapide du fluide gazeux sous pression dans les plaques de filtre à diaphragme (5), à chaque plaque de filtre à diaphragme étant associée l'une desdites soupapes (52) et le dispositif (16) comportant des moyens (21, 45, 46, 47, 49) pour la fermeture automatique des soupapes (52) lorsque les plaques de filtre à diaphragme sont comprimées et pour l'ouverture automatique des soupapes (52) lorsque l'écartement des plaques augmente à la suite de la diminution de la pression exercée par le dispositif (3) sur les plaques de filtre à diaphragme, caractérisé par le Fait que chaque soupape (52) est disposée dans un carter monobloc (17) raccordé latéralement, la soupape (52) étant constituée par un bouchon de fermeture (62) sensiblement cylindrique qui est guidé de façon mobile dans le sens axial dans un canal (23) lequel s'étend au travers du carter monobloc (17) et sensiblement parallèlement au plan des diaphragmes (39, 40), et dont l'une des extrémités communique avec l'espace (24) entre les diaphragmes (39, 40) des plaques de filtre à diaphragme (5), tandis que son autre extrémité débouche à l'air libre; et que de part et d'autre du bouchon de fermeture (62) est disposé respectivement un boulon d'écartement (64), les deux boulons d'écartement étant placés dans un alésage de guidage (65) qui coupe le canal (23) de manière concentrique et orthogonale et s'engageant à chaque fois dans un évidement en forme de coin (66) du bouchon de fermeture (62), la surface de clavette (66.1) débouchant, du côté dirigé vers la plaque de filtre à diaphragme (5), dans la surface latérale du bouchon de fermeture (62) et les faces frontales des boulons d'écartement (64) appliquées contre le bouchon de fermeture (62) présentant des chanfreins de clavette adaptés à l'évidement en forme de coin (66).

14. Filtre-presse selon la revendication 13, caractérisé par le fait que, entre son extrémité dirigée vers la plaque de filtre à diaphragme (5) et les évidements en forme de coin (66), le bouchon de fermeture (62) est muni sur sa surface latérale d'une rainure annulaire (67) pour un joint d'étanchéité qui assure l'étanchéité entre le bouchon de fermeture (62) et le carter monobloc (17).

15. Filtre-presse selon l'une des revendications 13 ou 14, caractérisé par le fait que les boulons d'écartement (64) présentent respectivement un évidement (68) en forme de fente s'étendant dans le sens axial qui est traversé par une goupille cannelée (69) fixe pour limiter leur course et pour assurer leur fixation rigide en rotation dans le carter monobloc (17).

16. Filtre-presse selon l'une des revendications 13 à 15, caractérisé par le fait que le boulon d'écartement (64) présente une longueur légèrement plus grande que la partie de l'alésage de guidage (65) le recevant.

17. Filtre-presse selon l'une des revendications 13 à 16, caractérisé par le fait que le bouchon de fermeture (62) est muni, à son extrémité dépassant du carter monobloc (17), d'un élément de raccordement (70) pour une chaîne de sécurité ou analogue.

## FIG. 1

## FIG. 3

## FIG. 2

## FIG. 4

## FIG. 5

Fig. 6

Fig. 7

Fig. 8

Fig. 9

Fig. 10

20

Fig. 11